# EUROPEAN PATENT SPECIFICATION

(11) **EP 1 980 770 B1**
(45) Date of publication and mention of the grant of the patent: **04.08.2010**
(21) Application number: 08251339.1
(22) Date of filing: 05.04.2008
(51) Int. Cl.: F16H 25/20

(54) **Actuator arrangement**
Aktuatoranordnung
Agencement d'actionneur

(30) Priority: 13.04.2007 GB 0707122
(43) Date of publication of application: 15.10.2008
(73) Proprietor: Goodrich Actuation Systems Ltd., Solihull B90 4LA (GB)
(72) Inventor: Jones, Tony, Northfield Birmingham B31 2EH (GB)
(74) Representative: Bailey, Richard Alan

(56) References cited:
- EP-A- 1 308 645
- EP-A- 1 645 780
- US-A- 5 711 396
- US-A- 6 109 415

## Description

This invention relates to an actuator arrangement and in particular to an actuator arrangement suitable for use in a thrust reverser system for use in moving components of the thrust reverser system between stowed and deployed positions.

One form of thrust reverser system includes a pair of part generally cylindrical cowls each being arranged to be driven between stowed and deployed positions by a plurality of linearly extendable actuators. Commonly, the actuators used in this application have been hydraulically driven. However, the use of electrically powered thrust reverser systems is becoming more common.

One form of electrically powered thrust reverser system includes a cowl moveable by a plurality of ball or roller screw type actuators, for example three such actuators may be provided. A single electrically powered motor is used to drive all of the actuators associated with the cowl, an appropriate gear box and drive transmission system being provided to distribute and transmit power to the actuators and to ensure that the actuators operate in synchronism with one another at the same speed.

In normal use; the actuators are driven at high speed over the majority of their length, the motor being controlled to reduce the speed at which the actuators are driven as the actuators approach their stowed or fully deployed positions so that, when the stowed or fully deployed positions are reached, movement can be safely arrested by claw stops provided in the actuators. The stops are configured so that the stops of all of the actuators associated with the cowl engage to arrest further movement simultaneously.

There is a requirement for the stops provided in the actuators to be able to arrest movement even if the motor fails to slow the rate of operation of the actuators as they approach the stowed or fully deployed positions, for example as a result of a failure in the thrust reverser control system resulting in the occurrence of a so-called powered runaway condition in which the motor continues to be driven at full speed as these positions are approached.

One way in which the stops can be designed to be able to arrest such movement is to increase the radial height of the stops so as to enable them to withstand greater loadings as would occur in such circumstances. However, doing so results in the diameter of the tail tube of the actuator being increased. As the actuators are approximately 1 m long, increasing the diameter of the tail tube even by a relatively small amount can result in a significant increase in the weight of the actuator arrangement, which is undesirable.

US 5711396 describes a power steering system including a motor with two drive trains for applying drive, in opposite directions, to a steering rack. A freewheel is provided whereby operation of the steering system when the motor is stationary is permitted.

Other arrangements in which each actuator has its own motor associated therewith are known and suffer from similar disadvantages.

It is an object of the invention to provide an actuator arrangement in which the problem outlined hereinbefore is overcome or of reduced effect.

According to the present invention there is provided an actuator arrangement comprising an input member, an extendable actuator having a rotatable shaft, a first drive transmission operable to transmit drive between the input member and the shaft when the shaft is under compression, and a second drive transmission operable to transmit drive between the input member and the shaft when the shaft is under tension, wherein a ratchet mechanism is provided in just the second drive transmission so that the second drive transmission is able to apply drive to the shaft in one rotary direction only.

Such an arrangement is advantageous in that, in the event of a powered runaway condition, the ratchet mechanism can operate to avoid or restrict the transmission of motor power to the actuator. The energy with which the actuator impacts the limit stops at its fully deployed position is thus reduced compared to the situation where motor power continues to be applied to the actuator until the fully deployed position is reached. Consequently, stops of smaller dimensions can be used, and so the tail tube diameter of the actuator can be reduced.

The first drive transmission conveniently comprises a friction drive.

The second drive arrangement conveniently comprises a friction drive arranged in series with the ratchet mechanism.

Preferably a biasing arrangement is provide to bias the shaft towards a position in which the first drive transmission is engaged. The biasing arrangement may be incorporated into thrust bearings associated with the shaft.

The ratchet mechanism conveniently comprises a ratchet member formed with ratchet teeth, and a ring carrying a deflectable pawl engageable with the teeth, upon relative rotation between the ratchet member and the ring, to allow relative rotation in one direction but restrict or prevent relative rotation in an opposite direction. The ratchet teeth are conveniently shaped to support the ring for rotation relative to the ratchet member.

A plurality of actuator arrangements of the type described hereinbefore may be used to drive a single thrust reverser cowl, control means preferably being provided to ensure that the actuators are operated simultaneously at the same speed. Alternatively, a plurality of actuators and associated first and second drive transmissions may be provided, each being driven from a common motor.

The invention will further be described, by way of example, with reference to the accompanying drawings, in which:
Figure 1 is a diagrammatic view illustrating an actuator arrangement in accordance with one embodiment of the invention;

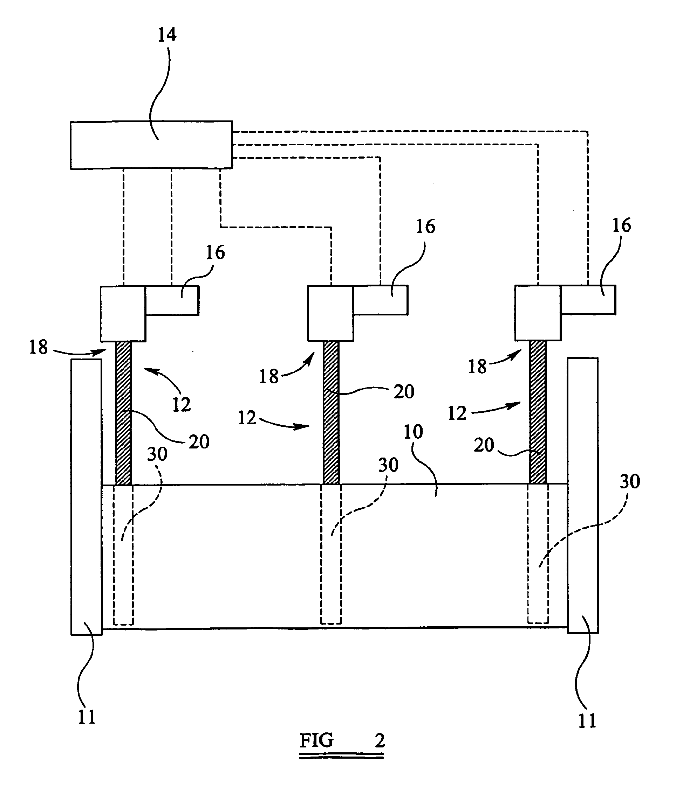

Figure 2 is a diagrammatic view illustrating part of a thrust reverser system incorporating the actuator arrangement of Figure 1; and
Figure 3 is a view illustrating the ratchet mechanism of the actuator arrangement of Figure 1.

Referring to the accompanying drawings there is illustrated one half of a thrust reverser system including a thrust reverser cowl 10 movable between stowed and deployed positions. The cowl 10 is supported and guided for movement by tracks 11. The cowl 10 is arranged to be driven by three substantially identical actuator arrangements 12, the operation of all of which is controlled by an electronic controller 14.

Each actuator arrangement 12 comprises an electrically powered motor 16 arranged to drive an actuator 18. The actuator 18 comprises a shaft 20 which is rotatable but which is held against significant axial movement by bearings 36. A thrust bearing arrangement 22 is arranged to accommodate a small amount of axial movement of the shaft 20 relative to the bearings 36. The shaft 20 is formed with a helical thread formation 24. A nut 26 encircles the shaft 20, the nut being provided with an internal groove in which balls 28 are located. The nut 26 is connected to a tail tube 30 which, in turn, is connected to the cowl 10. The nut 26 is held against rotation by the mounting of the tail tube 30 to the cowl 10, and the balls 28 are arranged to cooperate with the thread formation 24 such that upon rotation of the shaft 20, the nut 26 translates along the shaft 20 resulting in the cowl 10 being driven between its stowed and deployed positions. The direction of movement of the cowl 10 is dependent upon the rotary direction of the shaft 20.

The motor 16 includes an output gear 32 which meshes with an input member in the form of a gear 34 encircling the shaft 20. The gear 34 is supported by bearings 36 and is free to rotate relative to the shaft 20. A drive transmission arrangement 38 is provided to transmit rotary motion between the gear 34 and the shaft 20. The drive transmission arrangement 38 comprises a first friction drive transmission 40 in the form of at least one friction disc 42 sandwiched between the gear 34 and a shoulder 44 formed on the shaft 20, and a second friction drive transmission 46 comprising at least one friction disc 47 and a ratchet mechanism 48, the at least one friction disc 47 being sandwiched between an opposite side of the gear 34 and a ring 50 of the ratchet mechanism 48.

The ring 50 of the ratchet mechanism 48 is supported against significant axial movement by the thrust bearing arrangement 22. The inner circumference of the ring 50 is of circular cross-section, a recess 52 being provided to accommodate a pawl 54 which is pivotally connected to the ring 50. The shaft 20 passes through the ring 50, and the part of the shaft 20 located within the ring 50 forms a ratchet member shaped to define a series of ratchet teeth 56 with which the pawl 54 can engage to permit substantially free relative rotation between the ring 50 and the shaft 20 in one rotary direction, but to limit or prevent rotation in the reverse direction.

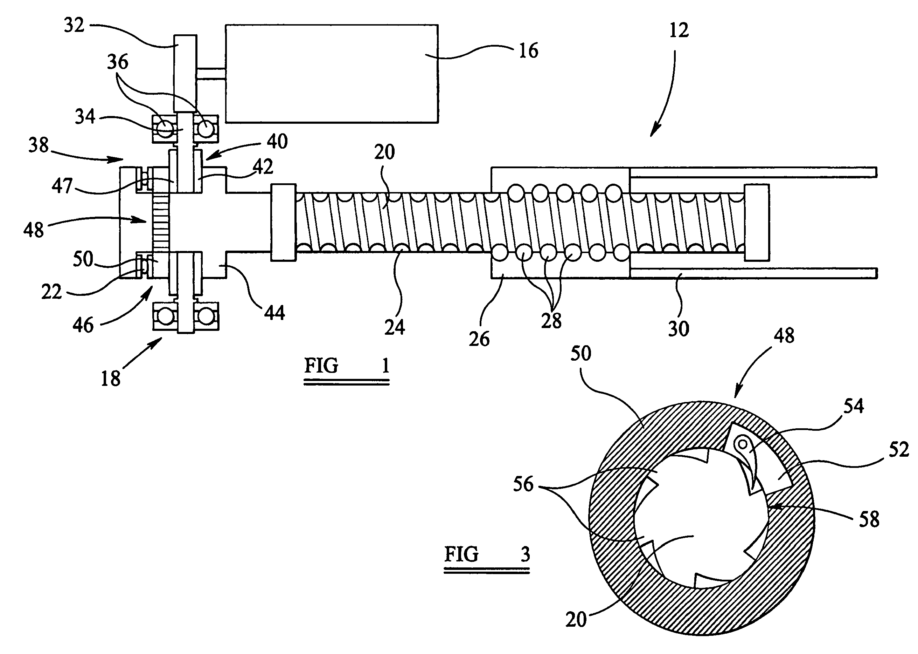

As shown in Figure 3, the ratchet teeth 56 are of 'flat topped' form with the result that they define a broken, cylindrical surface 58 of dimensions such that the ring 50 is supported so as to remain coaxial with the shaft 20, in use.

In use, with the actuator 18 in its fully retracted position, and hence with the cowl 10 in its stowed condition, upon receipt of a command signal from the controller 14 to deploy the cowl 10, the motor 16 is driven causing rotation of the gear 34. As the cowl 10 is stowed, the aerodynamic loadings thereon are, initially, relatively low, and the biasing provided by the thrust bearing arrangement 22 urges the shaft 20 to the left, in the orientation illustrated, compressing the first drive transmission 40 such that drive is transmitted from the gear 34 to the shaft 20, thereby causing rotation of the shaft 20 and movement of the cowl 10. The relatively light compression of the first drive transmission 40 allows sufficient torque to be transmitted to start deployment of the cowl 10 before the friction disc 42 starts to slip relative to the gear 34 and/or the shoulder 44. As the cowl 10 starts to move, the aerodynamic loadings thereon increase, initially assisting in urging the shaft 20 to the left, placing the shaft and the first drive transmission 40 under greater compression, and drive continues to be transmitted through the first drive transmission 40. The increased compression of the first drive transmission 40 permits the transmission of higher torques to the shaft 20.

After movement of the cowl 10 beyond a certain point, the aerodynamically applied loadings start to assist the movement of the cowl 10. During this part of the deployment procedure, the motor 16 is used to apply a braking load, when necessary, to regulate the speed of deployment and to allow slowing of the deployment rate as the cowl approaches its fully deployed position. The application of the assisting aerodynamic loads places the shaft 20 into tension and urges the shaft 20 to the right in the orientation illustrated. Consequently, the compressive load experienced by the first drive transmission 40 is reduced and slipping thereof can occur resulting the drive transmitted thereby being reduced, and the friction discs of the second drive transmission 46 are compressed with the result that drive is transmitted between the gear 34 and the ring 50. The orientation of the ratchet mechanism 48 is such that the braking loads applied by the motor 16 are transmitted through the ratchet mechanism 48, the pawl 54 engaging one of the teeth 56 to resist relative rotation between the ring 50 and the shaft 20.

It will be appreciated that, with such an arrangement, the rotary speed of the shaft 20 can be regulated by motor braking and the shaft 20 can be slowed to reduce the rate of deployment as the fully deployed position is approached.

To return the cowl 10 to its stowed position, the motor 16 is driven to return the actuator 18 to its retracted position. During this movement, the shaft 20 will be under tension and so drive is transmitted through the second drive transmission 46. The ratchet mechanism 48 again transmits the rotary load in this direction, the load being applied in the same direction as the braking loads applied during deployment

In the event that, during deployment, the motor 16 continues to apply forward drive rather than a braking load once the aerodynamically applied assisting loads are experienced, a so-called 'powered runaway' condition, the ratchet mechanism 48 will operate to avoid the transmission of further forward motor drive to the shaft 20, the pawl 54 riding up and over the teeth 56 in this rotary direction, thus the shaft 20, although not being slowed by the operation of the motor 16, will not be assisted by the operation thereof and so the stop at the fully deployed position is impacted by the actuator with less force than would otherwise be the case. Consequently, the size of the stops required to halt extension of the actuator in these conditions is smaller than would otherwise be the case, and so a smaller diameter tail tube can be used.

Although not described or illustrated in detail, it will be appreciated that a number of sensors will be provided in the actuator arrangement to provide feedback signals to the controller to enable the controller to ensure that all of the actuators arrangements are driven simultaneously and at the same speed as one another. Further, the usual lock arrangements, etc, will be provided to ensure that the cowl can only be moved to its deployed position at appropriate times. As relative rotation can occur between the shaft 20 and the drive train thereto, sensing of the actuator position should be achieved by monitoring the actuator and/or cowl position rather than by monitoring the motor position. Similarly, braking should be achieved by braking the shaft 20 rather than just the motor 16.

The description hereinbefore is of an arrangement of the type in which each actuator has its own motor associated therewith. The invention is also applicable, with appropriate modifications, to arrangements in which a single motor is used to drive a plurality of actuators.

A number of other modifications and alterations may be made to the arrangement described hereinbefore without departing from the scope of the invention.

## Claims

1. An actuator arrangement comprising an input member (34), an extendable actuator (18) having a rotatable shaft (20), a first drive transmission (40) operable to transmit drive between the input member (34) and the shaft (20) when the shaft (20) is under compression, and a second drive transmission (46) operable to transmit drive between the input member (34) and the shaft (20) when the shaft (20) is under tension, wherein a ratchet mechanism (48) is provided in just the second drive transmission (46) so that the second drive transmission (46) is able to apply drive to the shaft (20) in one rotary direction only.

2. An arrangement according to Claim 1, wherein the first drive transmission comprises a friction drive (40).

3. An arrangement according to Claim 1 or Claim 2, wherein the second drive arrangement comprises a friction drive (46) arranged in series with the ratchet mechanism (48).

4. An arrangement according to any of the preceding claims, wherein a biasing arrangement is provided to bias the shaft (20) towards a position in which the first drive transmission (40) is engaged.

5. An arrangement according to Claim 4, wherein the biasing arrangement is incorporated into thrust bearings (22) associated with the shaft (20).

6. An arrangement according to any of the preceding claims, wherein the ratchet mechanism (48) comprises a ratchet member formed with ratchet teeth (56), and a ring (50) carrying a deflectable pawl (54) engageable with the teeth (56), upon relative rotation between the ratchet member and the ring (54), to allow relative rotation in one direction but restrict or prevent relative rotation in an opposite direction.

7. An arrangement according to Claim 6, wherein the ratchet teeth (56) are shaped to support the ring (54) for rotation relative to the ratchet member.

8. An arrangement according to any of the preceding claims, further comprising a motor (18) arranged to drive the input member (34).

## Patentansprüche

1. Aktuatoranordnung umfassend ein Eingangselement (34), einen ausfahrbaren Aktuator (18) mit einer drehbaren Welle (20), ein erstes Antriebsgetriebe (40), das betrieben werden kann, um einen Antrieb zwischen dem Eingangselement (34) und der Welle (20) zu übertragen, wenn die Welle (20) unter Druck steht, und ein zweites Antriebsgetriebe (46), das betrieben werden kann, um einen Antrieb zwischen dem Eingabeelement (34) und der Welle (20) zu übertragen, wenn die Welle (20) unter Spannung steht, wobei ein Sperrklinkenmechanismus (48) nur in dem zweiten Antriebsgetriebe (46) bereitgestellt wird, so dass es dem zweiten Antriebsgetriebe (46) ermöglicht wird einen Antrieb auf die Welle (20) in nur einer drehbaren Richtung aufzubringen.

2. Anordnung nach Anspruch 1, wobei das erste Antriebsgetriebe ein Reibungsgetriebe (40) umfasst.

3. Anordnung nach Anspruch 1 oder Anspruch 2, wobei die zweite Getriebeanordnung ein Reibungsgetriebe (46) umfasst, das in Reihe mit dem Sperrklinkenmechanismus (48) angeordnet ist.

4. Anordnung nach einem der vorstehenden Ansprüche, wobei eine Vorspannanordnung bereitgestellt wird, um die Welle (20) in Richtung einer Position, in der das erste Antriebsgetriebe (40) in Eingriff kommt, vorzuspannen.

5. Anordnung nach Anspruch 4, wobei die Vorspannanordnung in einem Drucklager (22) eingebracht ist, das mit der Welle (20) verbunden ist.

6. Anordnung nach einem der vorstehenden Ansprüche, wobei der Sperrklinkenmechanismus (48) ein Sperrelement, das mit Sperrzähnen (56) geformt ist, und einen Ring (50) umfasst, der eine auslenkbare Sperrklinke (54) trägt, die mit den Zähnen (56) bei einer relativen Drehung zwischen dem Sperrelement und dem Ring (50) in Eingriff kommen kann, um eine relative Drehung in eine Richtung zu ermöglichen, und gleichzeitig eine relative Drehung in eine entgegengesetzte Richtung zu begrenzen oder zu verhindern.

7. Anordnung nach Anspruch 6, wobei die Sperrzähne (56) geformt sind, um den Ring (50) für eine Drehung im Verhältnis zum Sperrelement zu unterstützen.

8. Anordnung nach einem der vorstehenden Ansprüche, ferner umfassend einen Motor (16), der angeordnet ist, um das Eingangselement (34) anzutreiben.

## Revendications

1. Agencement d'actionneur comprenant un élément d'entrée (34), un actionneur extensible (18) comportant un arbre rotatif (20), une première transmission (40) opérable pour transmettre l'entraînement entre l'élément d'entrée (34) et l'arbre (20) lorsque l'arbre (20) est sous compression, et une deuxième transmission (46) permettant de transmettre l'entraînement entre l'élément d'entrée (34) et l'arbre (20) lorsque l'arbre (20) est sous tension, un mécanisme à rochet (48) étant fourni dans la deuxième transmission seulement (46) de sorte que la deuxième transmission (46) peut entraîner l'arbre (20) dans une seule direction de rotation.

2. Agencement selon la revendication 1, dans lequel la première transmission comprend un entraînement par friction (40).

3. Agencement selon la revendication 1 ou 2, dans lequel le deuxième agencement d'entraînement comprend un entraînement par friction (46) agencé en série avec le mécanisme de rochet (48).

4. Agencement selon l'une quelconque des revendications précédentes, dans lequel un agencement de sollicitation est fourni pour solliciter l'arbre (20) vers une position dans laquelle la première transmission (40) est engagée.

5. Agencement selon la revendication 4, dans lequel l'agencement de sollicitation est incorporé dans une butée (22) associée à l'arbre (20).

6. Agencement selon l'une quelconque des revendications précédentes, dans lequel le mécanisme de rochet (48) comprend un élément de rochet formé avec des dents de rochet (56), et une bague (50) portant un cliquet (54) pouvant être dévié et pouvant s'engager dans les dents (56) lors d'une rotation relative entre l'élément de rochet et la bague (50) pour permettre une rotation relative dans une direction tout en limitant ou empêchant une rotation relative dans une direction opposée.

7. Agencement selon la revendication 6, dans lequel les dents de rochet (56) sont formées pour supporter la bague (50) en vue d'une rotation par rapport à l'élément de rochet.

8. Agencement selon l'une quelconque des revendications précédentes, comprenant en outre un moteur (16) agencé pour entraîner l'élément d'entrée (34).
